# EUROPEAN PATENT APPLICATION

(11) **EP 3 441 525 A1**
(43) Date of publication of application: **13.02.2019**
(21) Application number: 18187462.9
(22) Date of filing: 06.08.2018
(51) Int. Cl.: E01F 9/559, E01F 9/669, E01F 9/553, E01F 9/619

(54) **SIGNALLING DEVICE TO INDICATE TRAVEL IN THE CORRECT OR INCORRECT DIRECTION ON ROADWAYS**

(30) Priority: 07.08.2017 PT 201711442
(71) Applicant: Município Do Fundão, 6230-338 Fundão (PT)
(72) Inventor: NOGUEIRA GONÇALVES, FERNANDO, P-6230-483 Fundão (PT)
(74) Representative: Lourenço Martinho do Rosário, Ana Margarida

(57) **Abstract**

The equipment described in this invention has the purpose of alerting the driver of a vehicle travelling on a roadway if he is moving in the correct or incorrect direction of travel. The equipment of this invention comprises a base (1) with attachment means that allows its attachment, to the pavement, to safety barriers or to aboveground structures. The base (1) has signalling means (2) inserted on opposing sides of the equipment, one on the side turned in for the correct direction of travel (2.a), and another on the side turned in for the incorrect direction of travel (2.b). The colour of the signalling means (2) turned in for the correct direction of travel (2.a) will be green. The colour of the signalling means (2) turned in for the incorrect direction of travel (2.a) will be red.

## Description

### Scope of the Invention

The invention described in this document falls within the domain of roadway signs, specifically, roadway signs equipped with signalling means that help the driver to understand if he is driving is vehicle in the correct direction of traffic or if he is driving in the opposite direction, that is, against the flow of traffic.

### Background of the Invention

The use of equipment fitted with reflectors or light bulbs as driving aids, whether in marking out lanes, lane obstacles, etc., is well known.

There is abundant literature, for patents and otherwise, and various pages on the Internet, which refer to this type of equipment.

The document US5425596 (A) presents supporting equipment for reflectors that sit in a base, and which allows for the placement of reflectors on two of the opposing sides of the support.

Patent EP1135558 (B1) also presents supporting equipment for reflectors that sit in a base and that allow for the placement of reflectors on two opposing sides of the support.

Document US2014197955 (A1) presents equipment that supports LED light bulbs. The LED light bulbs are placed on two opposing sides of the support.

### Advantages of the Invention

The primary advantage of the present invention is that, using existing equipment, it helps resolve a problem that arises with some regularity on roadways across the world, resulting in many fatal accidents - driving against the flow of traffic.

Using equipment structures for placement on roadways, fixed to the pavement, safety barriers, or above-ground structures, and which are currently used to signal lane limits, roadway obstacles, etc., it is possible to fit this equipment with means of signalling, namely light bulbs and/or reflectors, that indicate if the vehicle is travelling in the correct direction of travel or in the wrong direction of travel.

### Brief Description of the Drawings

These and other features are to be easily understood by the accompanying drawings, which should be taken as examples only and are not to be considered as limiting of its scope. For illustrative purposes, some of the measurements of the elements of drawings may be exaggerated and not drawn to scale. The absolute and relative dimensions do not match actual relations for carrying out the invention.

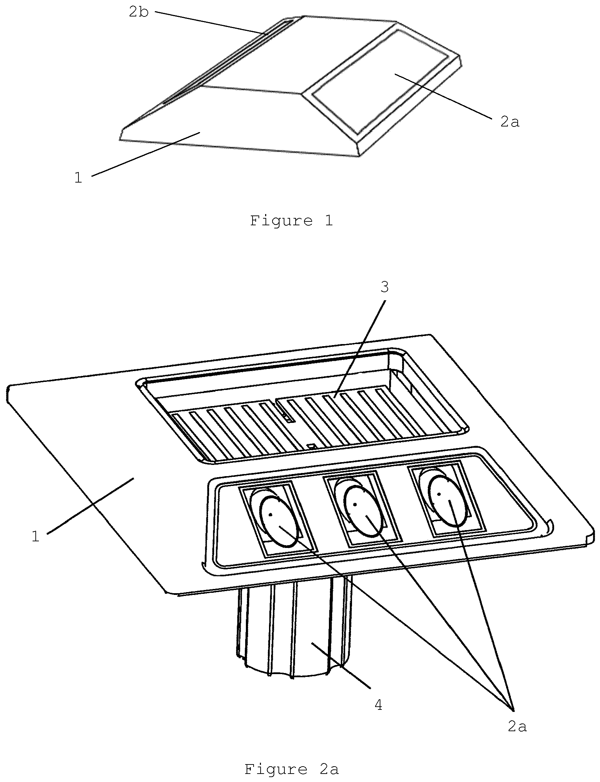

Figure 1 presents a top view of the invention equipment, in a first embodiment.

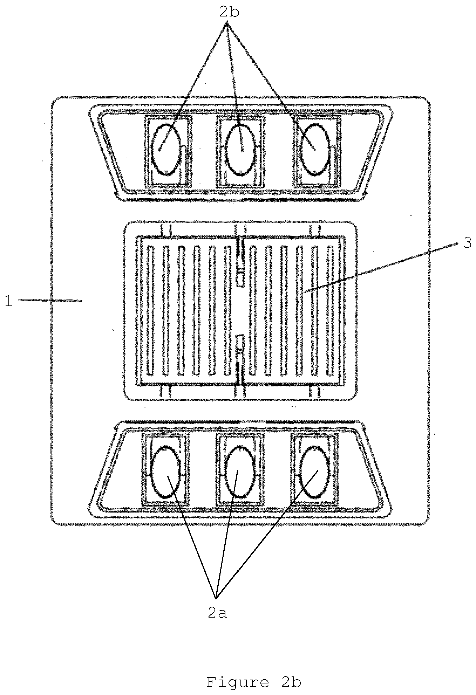

Figures 2a and 2b show, respectively, a top perspective view and a top view of the invention equipment, in a second embodiment.

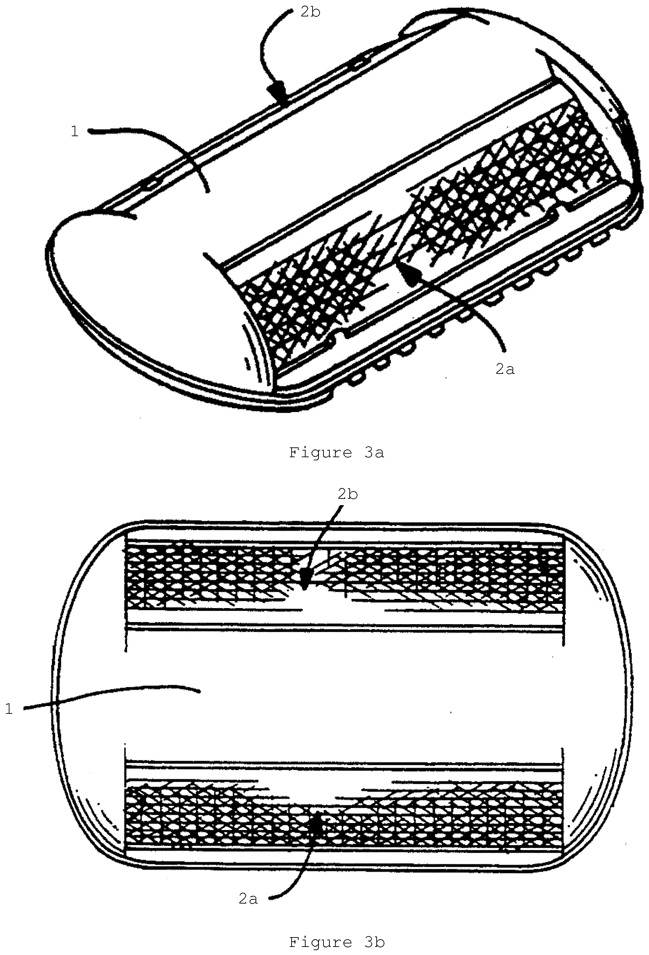

Figures 3a and 3b show, respectively, a top perspective view and a top view of the invention equipment, in a third embodiment.
Figure 4 shows a schematic representation of a roadway lane with the invention equipment installed.

In the figures are visible their various components:
1. Base
2. Signalling means
   a. for the correct direction of travel
   b. for the incorrect direction of travel
3. Power supply
4. Support

### Detailed Description of the Invention

The equipment described in this invention is a device that has the purpose of alerting the driver of a vehicle travelling on a roadway, if he is moving in the correct or in the incorrect direction of travel.

This invention refers to improvements introduced to equipment fitted with signalling means, placed to demarcate roadway lane limits, roadway obstacles, etc. This equipment is normally fixed to the pavement, placed on safety barriers, or on aboveground structures.

"Signalling means" is understood as any medium that allows for the emission or reflection of light, namely, but not exclusively, light bulbs or reflectors. "Power supply" is understood as any medium that allows for the supply of electricity to the signalling means, namely, but not exclusively, secondary cell batteries, primary cell batteries or solar panels.

The equipment of this invention consists of a base (1) with attachment means, namely, but not exclusively, to pavement, to safety barriers or to aboveground structures. The base (1) has signalling means (2) inserted on opposing sides of the equipment, one inserted on the side turned in for the correct direction of travel (2.a), and another inserted on the side turned in for the incorrect direction of travel (2.b) .

The signalling means (2) turned in for the correct direction of travel (2.a) will have a colour, namely, but not exclusively, green, or another colour that clearly indicates to the driver that he is moving in the correct direction of travel.

The signalling means (2) turned in for the incorrect direction of travel (2.b) will have a colour, namely, but not exclusively, red, or another colour that clearly indicates to the driver that he is moving in the incorrect direction of travel, that is, against the flow of traffic.

In this way, the same equipment will indicate to the driver if he is moving in the correct direction of travel, or the incorrect direction.

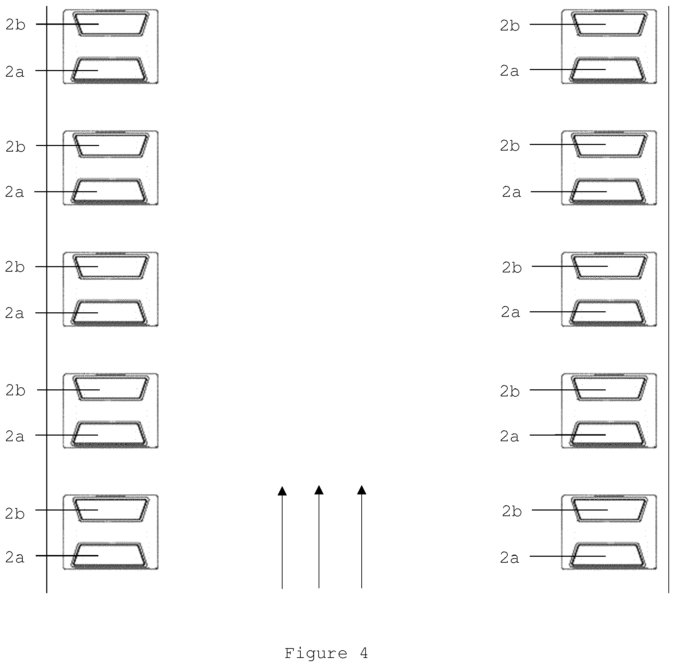

As shown in figure 4, when a vehicle is travelling in the correct direction of travel, he will always have the signalling means (2) for the correct direction of travel (2.a) turned towards him. If a vehicle is travelling in the incorrect direction of travel, he will always have the signalling means (2) for the incorrect direction of travel (2.b) turned towards him.

This visual aid is particularly relevant in situations where the driver may not be able to fully perceive if he is correctly oriented. One of the most important situations is that of one-way road, such as the entryways on motorways and expressways, as well as roundabouts.

In an embodiment, the equipment is fixed to a support (4).

In an embodiment, the equipment has a power supply (3) that feeds the signalling means (2) if needed, namely, but not exclusively, if they are light bulbs or led. The power supply (3) can also feeds the communication system.

In an embodiment, the equipment is equipped with a wireless communication system that, in case the signalling means (2) are means in which the color can be modified, for instance, if they are led lamps, can changes the colors of the signalling means (2). This communication system may be useful if, under particular conditions, namely, fog, accident, etc. more efficient or a different set of colours must be applied.

The wireless communication system is any wireless communications system capable of receiving and sending information, including but not limited to: Bluetooth, GSM, Wi-Fi, Zigbee, 3G, 4G, RFID, Microwave.

## Claims

1. Signalling device to indicate travel in the correct or incorrect direction on roadways, comprising a base (1), signalling means (2) for the correct direction of travel (2.a) and for the incorrect direction of travel (2.b) wherein the colour of the signalling means (2) for the correct direction of travel (2.a) being different from the colour of the signalling means (2) for the incorrect direction of travel (2.b).

2. Signalling device according to claim 1, wherein the colour of the signalling means (2) for the correct direction of travel (2.a) being green.

3. Signalling device according to claim 1, wherein the colour of the signalling means (2) for the incorrect direction of travel (2.b) being red.

4. Signalling device according to claims 1 through 3, wherein the signalling means (2) being reflectors.

5. Signalling device according to claims 1 through 3, wherein the signalling means (2) being light bulbs or led.

6. Signalling device according to claim 1, wherein the device being fixed to the pavement.

7. Signalling device according to claim 1, wherein the device being fixed to safety barriers.

8. Signalling device according to claim 1, wherein the device being fixed to aboveground structures.

9. Signalling device according to claim 1, wherein the device is equipped with a wireless communication system.
